# EUROPEAN PATENT APPLICATION

(11) **EP 1 589 041 A1**
(43) Date of publication of application: **26.10.2005**
(21) Application number: 05075922.4
(22) Date of filing: 19.04.2005
(51) Int. Cl.: C08F 20/12

(54) **Process for preparing a cureable acrylic elastomer and a cured composition thereof**

(30) Priority: 20.04.2004 BR 0401468
(71) Applicant: Petroflex Industria e Comercio S/A, Duque de Caxias, RJ (BR)
(72) Inventor: Moura Moutinho, Marcus Tadeu, Tijuca, Rio de Janeiro (BR); Folly Andrade, Bernardo, Leme, Rio de Janeiro (BR); de Andrade Coutinho, Paulo Luiz, Tijuca, Rio de Janeiro (BR)
(74) Representative: Ungria Lopez, Javier

(57) **Abstract**

The present invention patent application concerns a new process of polymerization in aqueous emulsion which is able to prepare either rubbers or acrylic elastomers bearing one or two active cure sites, evenly distributed along the polymer chain, whose polymerization final product is residual, monomer free, i.e., a new method which converts 100% of the reactive monomers. The new process developed as described in the present invention patent application also allows the manufacturing of rubbers or elastomers with narrow molecular weight distribution. Another subject of the present patent application is the rubbers or acrylic elastomers resulting from this new process. The present patent application is also intended to protect the rubber or acrylic elastomer curable compositions, which present excellent resistance to heat and cold, to oils, excellent compression set resistance. In addition, the present invention patent application concerns the cured goods made from such rubbers and acrylic elastomers.

## Description

The present invention patent application concerns a new process of polymerization in aqueous emulsion which is able to prepare either rubbers or acrylic elastomers bearing one or two active cure sites, evenly distributed along the polymer chain, whose polymerization final product is residual, monomer free, i.e., a new method which converts 100% of the reactive monomers. The new process developed as described in the present invention patent application also allows the manufacturing of rubbers or elastomers with narrow molecular weight distribution. Another subject of the present patent application is the rubbers or acrylic elastomers resulting from this new process. The present patent application is also intended to protect the rubber or acrylic elastomer curable compositions, which present excellent resistance to heat and cold, to oils, excellent compression set resistance. In addition, the present invention patent application concerns the cured goods made from such rubbers and acrylic elastomers.

Rubbers or acrylic elastomers are well-known due to their physical properties in the cured state. They are more and more important to the market each day, not only for their excellent physical characteristics, but also for their chemical properties, which enable their use in the numerous fields of industrial applications. Acrylic rubbers show high resistance to heat and adverse weather conditions, resistance to oils and to ozone, besides having good processability, high resistance to abrasion, low gas permeability, excellent compression set resistance and tear resistance. Acrylic rubbers are mainly used in the automotive industry as sealing material, as in the manufacturing of gaskets, sealants, retainers and hoses as well.

In spite of the positive properties mentioned above, the acrylic elastomer compositions available on the market still bear some drawbacks concerning their processing. They tend to stick to mill-mixer cylinders and present reduced scorch time. Literature shows that there is a constant search to optimize the properties mentioned above and to produce rubber or elastomer compositions with enhanced compression set resistance and increase resistance to low temperatures, preserving, at the same time, the resistance to oils.

Acrylic rubbers are acrylic acid ester based elastomers. Thus, acrylic polymers, in principle, do not have double bonds in the chain backbone which might permit their vulcanization. According to the Brazilian patent applications PI 71/190.951, published on Oct. 5^{th}, 1971 and PI 757932, published on Sep. 8^{th}, 1976, the introduction of unsaturated comonomers in the polymer chain, such as butadiene or isoprene, or comonomers containing reactive cure sites, such as vinyl chloroacetate or allyl glycidil ether, was the solution found in the technique for manufacturing rubbers or elastomers that could be readily vulcanized in systems either containing sulfur or crosslinked with amines.

However, according to the European patent application EP 290.131, published on Nov. 9^{th}, 1988, the acrylic rubbers containing an active cure site deriving from a halogenated vinylic monomer present the great disadvantage of causing mold during cure stage. On the other hand, those which have an epoxy grouping site, besides showing low cure speed, also bear the inconvenience of needing a long period of post heat-curing time, which is called secondary cure or post-cure, so that the curing reaction can be completed and the final article, totally cured and bearing the desirable physical properties, achieved.

Also, according to a European patent application EP 1.843 dated from June 16^{th}, 1979, the rubbers or elastomers which contain a halide active cure site present premature curing, also called scorch, while being mixed with the curing agent. This promotes the hardening of the elastomer, which makes its processing difficult and causes incomplete filling of the mold. The vulcanized elastomer will present bad shaping and poor physical properties. Lower temperatures might be used during the mixing process of the rubber or elastomer components so as to solve these problems and to enhance processing conditions, but that would lead to longer cure cycles, consequently causing a drop in production volume.

Thus, the technique demands a way-out for the problems caused by premature cure, i.e., scorch, which means that the techniques used for processing the material must be enhanced without this meaning an increase in production time. Through this new polymerization method developed according to the invention described in this patent application, it is possible to make rubbers or acrylic elastomers with longer scorch time.

Opposite to the solution to the problem of scorch presented by the proposal in EP 1,843, the rubber industry of the globalized world has to operate with a higher production volume and better product quality. The industry has not only increased in size but has also increased manufacturing speed, which means that now it has to operate with shorter goods manufacturing cycles. The reduction of this time has caused substantial increase in the production cycle speed and, consequently, in the temperature under which mill-mixers and other equipment have to operate. To such an extent, operating under lower temperatures so as to minimize production loss due to material pre-cure requires additional investment in cooling equipment that can lower such temperatures.

As to the application of elastomeric materials in the automotive industry, the segment that demands most of the production of these materials, one knows that the new cars they have been developing have more powerful engines each day. As a consequence, the temperatures generated inside the engine are very high, meaning that the elastomeric materials are more and more submitted to extreme thermal conditions, which requires that they have higher thermal resistance and higher resistance to oils. Moreover, because of climatic differences and of the various industrial applications, the elastomeric material should also be resistant to cold.

On these grounds, through the new process described in the present patent application, a new rubber or acrylic elastomer bearing a uniform composition and narrow molecular weight distribution was developed, having excellent resistance to heat and cold and to oils. Thus, the elastomeric compositions prepared according to this invention are able to meet the demands of the market, since they do not degrade during a long period in use.

Rubbers or acrylic elastomers can generally be prepared through emulsion, suspension, solution, or bulk polymerization. Emulsion and suspension polymerization are the most frequently used techniques, since they provide easier control of viscosity in the reaction system and higher monomer conversion when compared to the other techniques. Polymerization may be carried out through batch, continuous, or semi-continuous processes; in the latter, one or more reactive components may be added during the process. Reaction temperatures usually range from -10°C to around 100°C, but preferably between 5°C and 80°C. Polymerization should be conducted in an oxygen depleted system.

During polymerization in aqueous emulsion, the monomers are usually polymerized up to a conversion rate of 90%, i.e., the number of unreacted monomers is in the range of no more than 10% of the total mass of monomers added into the reactor. The amount of nonpolymerized monomers in the elastomer is an extremely important parameter to guarantee that the vulcanized or cured product bear the desired characteristics required by the industry, such as low compression set values and heat and oil resistance.

In the European patent application EP 1.110.980 published on June 27^{th}, 2001, however, one learns that even in small quantities like, for instance, the presence of 0.1% of unreacted monomers in the rubber, the residual monomers must be removed through post-treatment processes of the elastomer produced in the polymerization process. Besides meaning a higher production cost, these post-treatment processes also mean considerable additional time in the total process of rubber preparation. Still according to this patent request, extended handling of the rubber or elastomer in one more phase of the process might promote its deterioration during the mastication and cure phases. Thus, the invention proposed in the present patent application intends to present a solution to one of the technical and economical problems faced when using emulsion polymerization of acrylic esters through a new polymerization process. The new method invented uses low concentrations of monomers, which contain the active sites, such as the halogenated monomer; reducing, this way, casting molds corrosion during the molding and curing phases. It surprisingly converts a 100% of the monomers present in the reactive system, doing away with the subsequent post-treatment phases of the resulting latex; avoiding the possibility of deterioration of the elastomer during mastication or vulcanization phases; cutting down on production cost, and minimizing the risks of aggression towards the environment.

The post-treatment of the obtained latex can usually be carried out either through distillation by means of heat or low pressure; or by adjusting the amount of water used in washing, or washing time after coagulation, or by adjusting drying time or temperature and the amount of air blown. The elimination of such post-treatment phases greatly simplifies elastomer processing.

Emulsion Polymerization can be initiated by free radical-generating agents, such as: organic peroxides and hydroperoxides, like benzoyl peroxide, dicumyl peroxide, t-butyl peroxide, cumyl hydroperoxide, p-menthane hydroperoxide etc.; azo compounds, like azobisisobutyronitrile and azobisisobutylamidine etc.; persulfates, like ammonium, potassium and sodium persulfate, and ultraviolet light. Free radical initiators are generally combined with redox systems, or UV light is combined with photosensitive agents, such as benzophenone and organic diazo compounds.

According to the Brazilian patent application PI 9204219, published on Sep. 28^{th}, 1993, however, the use of systems initiated via free radicals has a considerable drawback. Due to changes in the relative concentrations of the monomer and the initiator, the typical processes of polymerization via free radicals tend, as polymerization goes on, to produce larger polydispersity. Wide distribution of molecular weight tend to provide poor physical-mechanical properties of the rubber, elastomer or polymer. Thus, control of the molecular weight distribution must be observed and taken care of all the polymerization reaction time through. This can be done by using the relation between the polymerization ratio and the kinetic parameters of free-radical polymerization and the control of the initiator concentration in relation to the monomer as time function. This way, the research carried out according to the present invention has also focused on developing a new polymerization process, via free radicals, that would be able to produce rubbers or acrylic elastomers with lower polydispersity. Besides, it has the additional advantage of producing rubbers or acrylic elastomers with lower polydispersity than the ones made through the technique used nowadays.

The Brazilian patent application PI 9204219 describes a polymerization process that produces polymers with narrow molecular weight distribution based on the control of polymerization rate during reaction. As stated in the PI 9204219, in the specific case of polymerization of alkyl acrylate or methyl methacrylate monomers, the monomer mixture may be added to the reaction vessel in several phases when approximately 5 to about 10% of the total monomer is added at a constantly increasing rate during about 10 to approximately 15 minutes in the course of the first phase; then about 40 to about 60% of the total monomer is added at a uniform rate during approximately 20 to approximately 40 minutes in the course of the second phase, and the remaining of the monomer is added at a constantly decreasing rate during approximately 45 to about 60 minutes in the course of the third phase. The exact quantities of monomer and the feeding times may vary slightly depending on specific monomers used and the chosen polymerization temperature. The quantities and rate of addition used above are appropriate for reaction temperatures of about 100 to about 120°c. If a little lower temperatures are used, a slightly slower rate of addition must be used so as to keep the exotherma under control during polymerization. Differently from what is known from the technique as it is nowadays, the new process of the present invention concerns a continuous, uniformly fed-batch polymerization method in which a pre-mixture of the monomer with the chain transfer agent is introduced in the reactor drop by drop at a previously established addition rate.

Typical emulsion polymerization uses persulfate salts or organic peroxide as initiators, including a redox system, water with desired PH adjusted by acids or bases, usually buffered with inorganic salts, besides anionic, cationic and non-ionic surface active agents. It is important to notice that the emulsion polymerization technique as it is suggests the use of chain transfer agents as an optional reactive component. The most commonly used agents are, for instance, the mercaptans.

The emulsion polymerization end product is a latex which has to go through a coagulation process so as to produce a solid rubber or elastomer. Typical coagulation processes use polyvalent metal salts and alcohols, such as magnesium sulfates, calcium chloride, methanol and isopropanol. Agglomeration techniques are also employed. The resultant polymer is usually washed and dried.

Although emulsion polymerization is one of the most common techniques used in elastomer producing industry, it still bears several problems yet to be solved, as shown in the present invention patent application.

Rubbers or elastomers obtained through this process are solid material, which, in general, have dilute solution viscosity (DSV) above 0.5 when measured at 0.4% by weight of the polymer solution in methyletyl ketone; a percentage of gel, or insolubles, varying from 0% to about 60% of the rubber or elastomer weight. The Mooney viscosity, ML₁₊₄ varies in the range of 10 to 100, preferably around 20 to 80 when estimated at 100°C. The acrylic rubbers prepared according to the new process bear low gel concentration, always less than 10% by weight and Mooney viscosity in the range of 15 to 60.

Rubbers or elastomers yielded this way are transformed in curable elastomeric compositions or cured through the incorporation, in regular equipment, of vulcanizing, curing or reticulating agents and of other components, such as fillers, antioxidants, plastifiers, emulsifiers, retarders, accelerators etc. Such equipment would be mill mixers, Banbury internal batch mixers, extruder milling machines and other similar ones. The rubbers or acrylic elastomers produced according to the new method invented and proposed in the present patent application are also used in the preparation of elastomeric compositions, which are mixed with the ingredients mentioned above in the same way as previously described and processed in conventional equipment.

The curing agents typically used in the technique to make rubbers containing one or more active sites derived from halogenated or carboxylic monomers are the ones defined in the application EP 1.097.950 and in the American patents US 3.875.092, US 3.912.672, US 3.976.610, US 5.008.345. Some examples of reticulating agents useful to the curing of monomeric sites containing halogen are the metallic salts of fatty acids, sulfur, sulfur donors, triazine and dithiocarbamic acid derivates. Some examples of reticulating agents useful to the curing of monomeric sites containing carboxyl are the primary and secondary aliphatic polyamines, such as hexamethylenediamine, tetramethylenepentamine and hexamethylenediamine carbamate; aromatic polyamines, like 4,4'-methylenedianiline and 4,4'-oxyphenyldiphenylaniline. Some examples of curing agents useful to rubber or elastomer reticulation containing halogen and carboxyl active sites are the quaternary ammonium salts and/or an organophosphoric acid and/or alkaline metal salts of a carboxylic acid and/or isocyanate-blocked amines. These agents are used in concentrations that vary from 0.1 to 25 parts by weight per 100 parts of the rubber or elastomer.

Elastomers are usually cured at a temperature around 120°C to 230°C, preferably between 135°C and 200°C. Cure time varies around 2 minutes at 200°C and more than 20 minutes at 130°C.

The current technique concerning emulsion polymerization processes via free radicals bears innumerous drawbacks, such as a wide molecular weight distribution in the final product and the need for polymer post-treatment, in order to eliminate residual monomers that might compromise quality, that is, the vulcanite's properties, besides increasing production costs and environmental risks.

Thus, in the present invention, a surprisingly new continuous batch polymerization process in aqueous emulsion, uniformly fed, drop by drop, in which the presence of the chain transfer agent is crucial to the yielding of rubbers or elastomers with narrow molecular weight distribution and free of residual monomers. It was unexpectedly found that, when the chain transfer agent is first mixed to the monomers in a vessel, followed by the addition of the monomer at a uniform rate, drop by drop, into the reaction vessel, there is better control of the obtained polymer's molar mass, since each droplet of the mixture bears the desired ratio between monomers and the chain transfer agent. Each droplet is immediately converted into polymer, what makes it possible to convert 100% of the reactive monomers. All along the reaction, the polymeric chains formed show very close molar masses, with active sites homogeneously distributed along the polymeric chain. According to this new process, the resultant polymer or acrylic rubber has narrower molar mass distribution, i.e., it is less polydisperse than other products available in the market. It not only has the advantage of converting all the monomers present in the reaction site, but also eliminates the post-treatment phase of the final product, intended to free it from residual monomers, which cause rubber or elastomer degradation. This means a considerable economic advantage, reducing cost and production time. The relationship by weight between the amount of monomers and the chain transfer agent depends on the polymerization temperature used and on the feeding time of the monomer and the chain transfer agent mixture into the reactor.

The present invention concerns a new polymerization process in aqueous emulsion that can produce rubbers or acrylic elastomers bearing one or two cure sites, the product having narrow molecular weight distribution and being free of residual unreacted monomers. The method converts 100% of reactive monomers and is carried out through a continuous, uniformly fed-batch process in which the reactor is fed drop by drop. Thanks to this new process, the rubbers or acrylic elastomers obtained do not need to go through one more phase to recover the monomers without loosing physical, chemical and mechanical properties, such as resistance to apolar substances (for example lubricant oils present in engines). The acrylic rubbers produced according to this new process are quite useful, especially in the manufacturing of articles resistant to high temperatures ranging from 150°C to 175°C, in contact with oils or not.

Another advantage is that it is easy to control the temperature in the reaction system. The continuous and uniform feeding of the reactive monomers and the chain transfer agent mixture, drop by drop, favors controlled heat built-up by the polymerization enthalpy. Thus, one can create an anticipating control mechanism. In case temperatures rise in the reaction, or there is any variation in the cooling system, the addition of the mixture comes to a halt, which means that heat build-up in the reaction is interrupted and temperatures stay under control. This way, it is possible to avoid risky situations as well as loss of materials and in productivity since there is no need to discharge the reactor vessel in an emergency.

The mass relation between the monomers in the mixture and the chain transfer agent ranges from 750:1 to 75,000:1, preferably, from 5,000:1 to 50,000:1, or even more desirable, from 8,000:1 to 15,000:1.

The preparation of the reaction mixture, monomers plus chain transfer agent, is carried out in a vessel, and optionally, in the presence of air. The two ingredients are mixed up to the point when the mixture is homogeneous. The mixture is slowly and continuously added into the polymerization reactor during the course of reaction. The time of addition of the mixture varies from 1 to 20 hours, preferably from 2 to 10 hours, depending on the desired molecular weight, polydispersity and viscosity of the resultant rubber or acrylic elastomer.

The first aspect of the new invention described in the present patent request is a new polymerization process in aqueous emulsion for the preparation of rubbers or acrylic elastomer bearing one or two cure sites uniformly distributed along the polymeric chain, with narrow molecular weight distribution and residual monomer-free, which is characterized by the fact that polymerization is carried out through a uniform, continuous fed-batch process, drop by drop, in which the chain transfer agent and the monomers are previously mixed in a vessel.

The chain transfer agent is present in the reaction mixture at the rate of 0.0013 to 0.13 parts per 100 parts of reactive monomers, preferably, 0.002 to 0.02, or even more preferably, 0.0067 to 0.0125, being chosen among the alkyl and/or aryl-alkyl mercaptans, like n-octyl mercaptan, n-dodecyl mercaptan, t-octyl mercaptan, t-dodecyl mercaptan, tridecyl mercaptan, tetradecyl mercaptan, hexadecyl mercaptan and similar ones, as well as their mixtures. The preferred agents are t-dodecyl mercaptan and n-dodecyl mercaptan.

The new process comprises the following phases:
a) Purging of the reactor with nitrogen gas so as to completely eliminate oxygen from the reaction system, since its presence would inhibit the initiation process and the propagation of the reaction;
b) Addition of the pre-heated emulsifier into the reaction vessel at around 65°C to 70°C;
c) Addition of a previously prepared solution of the free-radical initiator into the reaction vessel;
d) Feeding of a previously prepared mixture containing monomers and the chain transfer agent, drop by drop, at a continuous and uniform rate into the reaction vessel, until all of the mixture has reacted;
e) Transference of the reaction resultant latex to another vessel in which coagulation will be carried out;
f) Addition of a metal salt into the coagulation vessel, in sufficient quantities so as to trigger latex coagulation;
g) Washing and drying of the rubber or acrylic elastomer.

The emulsifier or emulsifying mixture is prepared by using surfactants commonly used in technique, especially, alkyl sulfates, alkyl sulfonates and ethoxylated alkylphenol, preferably, sodium lauryl sulfate. Demineralized water is used because the presence of ions might cause the insolubilization of the tensoactive agent or emulsifier, and, consequently, promoting deviation in the course of reaction and/or instability of the latex obtained. The water is pre-heated at around 60°C to 70°C before the surfactant is added, enhancing, this way, the kinetics of the tensoactive compound dissolution. The tensoactive agent is found present at levels between 2.0 to 6.0 parts per 100 monomer (phm), preferably in the range of 2.5 to 4.0 phm. After complete solubilization of the surfactant, a dispersant agent is also added up to its complete solubilization. The dispersant, which usually is a polymeric condensate of beta-naphthalene sulphonic acid, helps stabilize the latex formed and is present at concentration rates ranging from 0.1 to 2.5 phm, preferably, 0.7 to 1.5 phm. Finally, a pH buffering agent is added, in concentrations ranging between 0.2 and 1.5, preferably, 0.5 to 1.0 phm. Sodium bicarbonate is one of the most commonly used and preferred compounds in this invention. The resulting pH of the emulsified mixture must be adjusted to around 6.5 and 7.0, usually by using phosphoric acid if the PH must be reduced, or sodium hydroxide to increase it. The emulsified mixture is kept heated at the temperatures mentioned above (60°C to 70°C).

The free-radical generators used in this new method are those commonly used in the current technique. However, in the new process of this invention, the initiator is optionally prepared separately in a vessel inertized by nitrogen. The free-radical generator is solubilized before it is added into the reaction vessel. The free-radical generator concentration must be range from 0.05 to 1.5 phm, but preferably, 0.2 to 0.8 phm. Depending on the properties desired for the resultant rubber or elastomer, the initiator solution may be totally added into the reaction vessel before feeding of the reacting monomer mixture begins, or it may be partially added in the course of the reaction. When a persulfate is the initiator, it is preferable to add a part of it before the feeding of the reacting mixture of monomer with chain transfer agent, and, then, the other part is added in a second moment of the reaction.

The resultant product in the reactor is a latex that has to go through a coagulation process in order to become a solid polymer. In the coagulation phase, metal salts having a valency of 2 or higher, preferably calcium chloride and/or magnesium chloride. These salts make the tensoactive agent insoluble, breaking the micelles and promoting particle coalescence. Cationic polyelectrolytes can also be used to aid coagulation. After the coagulation process, the polymer is washed and dried.

A second aspect of the invention in the present patent request is the rubber or acrylic elastomer bearing one or two active cure sites homogeneously distributed along the polymeric chain, with narrow molecular weight distribution and free of residual, unreacted monomers, that is obtained through a continuous batch polymerization process in aqueous emulsion, uniformly fed with a reaction mixture of monomers and a chain transfer agent, drop by drop, which was previously prepared in a separate vessel. Such rubber or acrylic elastomer is characterized by consisting of :
a) 90 to 99% by weight, based on the total polymer weight, of an acrylate whose general formula is: 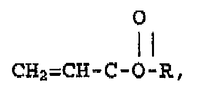 where R is a primary, secondary or tertiary alkyl radical containing from 1 or 8 carbon atoms, an alcoxyalkyl or alkylthioalkyl radical containing from 2 to around 12 carbon atoms;
b) 0 to 5% by weight of a monomer containing one or more carboxylic groupings of 3 to around 8 carbon atoms;
c) 0 to 5% by weight of a monomer containing an active halide grouping.

The monomers used in the technique of the present invention are the same generally used in the current technique, taking the ones mentioned in the US patent 5.097.304 as reference.

Examples of acrylates used as monomers are methyl acrylate, ethyl acrylate, propyl acrylate, n-butyl acrylate, isobutyl acrylate, n-pentyl acrylate, isoamyl acrylate, n-hexyl acrylate, 2-methylpentyl acrylate, n-octyl acrylate, 2-ethylhexyl acrylate, n-decyl acrylate, n-dodecyl acrylate, n-octadecyl acrylate, and the like; methoxymethyl acrylate, methoxyethyl acrylate, ethoxyethyl acrylate, butoxyethyl acrylate, ethoxypropyl acrylate, methylthioethyl acrylate, hexylthioethyl acrylate, and the like; and α, β-cyanoethyl acrylate, α, β and γ-cyanopropyl acrylate, cyanobutyl acrylate, cyanohexyl acrylate, cyanooctyl acrylate, and the like, besides mixtures thereof. R is preferably an alkyl radical containing from 1 to 10 carbon atoms, or an alcoxyalkyl radical containing from 2 to 8 carbon atoms. Examples of the most preferred acrylates are ethyl acrylate, propyl acrylate, n-butyl acrylate, hexyl acrylate, 2-ethylhexyl acrylate, octyl acrylate, methoxyethyl acrylate and ethoxyethyl acrylate.

Acrylic rubber should contain from around 94 to 98% by weight of above mentioned acrylic monomers. Examples of monomers that contain one or more carboxylic groupings are acrylic acid, methacrylic acid, β acid, β-dimethylacrylic acid, crotonic acid, 2-pentenoic acid, 2-hexenoic acid, maleic acid, fumaric acid, citraconic acid, mesaconic acid, itaconic acid, 3-butene-1,2,3-tricarboxylic acid and the like. Acrylic acid, methacrylic acid are the preferred ones in the present invention.

Also preferably, acrylic rubber should contain from 0.5 to 3.5% of monomers bearing active carboxylic sites. Examples of monomers containing one active halogen site are vinyl chloroacetate, vinyl bromoacetate, allyl chloroacetate, vinyl chloropropionate, vinyl chlorobutyrate, vinyl bromobutyrate, 2-chloroethyl acrylate, 3-chloropropyl acrylate, 4-chloropropyl acrylate, 2-chloroethyl methacrylate, 2-bromoethyl acrylate, 2-iodethyl acrylate, 2-chloroethyl vinyl ether, chloromethyl vinyl ketone, 4-chloro-2-butenyl acrylate, vinyl benzyl chloride, 5-chloromethyl-2-norbornene, 5-(α-chloroacetoxymethyl)-2-norbornene, 5-(α, β-dichloropropionylmethyl)-norbornene, and the like. The preferred monomers are vinyl chloroacetate, allyl chloroacetate, 2-chloroethyl acrylate, 2-chloroethyl vinyl ether and vinyl benzyl chloride.

Acrylic rubber should have from 0.5 to 3.5% of monomers containing active halogen sites.

A third aspect of the present invention described in this patent application are the curable compositions containing the acrylic rubber prepared according to this new process invented and that bear excellent resistance to heat, to cold, to oils, and low permanent compression set values.

The curing agent used in rubber compositions, as described in the invention, is not a crucial ingredient, that is, any agent capable of curing rubbers or elastomers containing one or two active cure sites will do. The active curing agent present in the rubber or elastomeric compositions of the present invention is found in concentrations ranging from 0.1 to 10 parts per 100 parts of rubber.

The rubbers of the invention have Mooney viscosity (UML 1+4 @ 100°C) ranging from 15 to 60.

The last aspect of the invention is the cured and molded articles obtained from rubbers produced through the new method invented.

### EXAMPLES AND RESULTS

The examples presented below, far from being limiting, mean to confirm the improvements of the new polymerization process in aqueous emulsion.

### Example 1

The mixture of monomers is prepared in a first vessel equipped with an agitator. The mixture contains 96 parts of ethyl acrylate, 1 part of methacrylic acid, 3 parts of vinyl chloroacetate and 0.01 parts of t-dodecyl mercaptan. In another vessel, an emulsifying mixture is prepared containing 275 parts of demineralized water pre-heated at 70°C, 3.2 parts of sodium lauryl sulfate, 1.1 parts of a polymeric condensate of β-naphthalene sulphonic acid and 0.7 parts of sodium bicarbonate. In a third vessel, an initiator solution is prepared with 70 parts of water and 0.45 parts of potassium persulfate.

The polymerization reactor is repeatedly filled and purged with nitrogen gas so as to eliminate any trace of oxygen. The pre-heated emulsifying mixture is then fed into the reactor and this is followed by the addition of 3/5 of the initiator batch. The reactor temperature is adjusted to 50°C and the continuous and uniform feeding of the reaction mixture (monomers mixed with the chain transfer agent) starts, drop by drop, during six hours. During the third hour of the reaction, however, the remaining part of the initiator solution is added. When the mixture is totally consumed, the reaction is over. All along the course of the reaction, each monomer droplet is 100% converted into polymer. The rate of total solids in the resultant latex, after the addition of the mixture is over, is 23.41%.

After the end of the reaction, the rubber latex or the acrylic elastomer is coagulated by the addition of excessive calcium chloride. The rubber is washed and dried at around 65°C.

### Example 2

The reaction mixture is prepared in a vessel equipped with and agitator and contains 46 parts of ethyl acrylate, 50 parts of butyl acrylate, 1.2 parts of methacrylic acid, 2.8 parts of vinyl chloroacetate and 0.0166 parts of t-dodecyl mercaptan. The emulsifying mixture is prepared in a second vessel and contains 335 parts of demineralized water pre-heated at 70°C, 2.6 parts of sodium lauryl sulfate, 1.1 parts of a polymeric condensate of β-naphthalene sulphonic acid and 0.7 parts of sodium bicarbonate. The activator solution is prepared in another vessel with 13 parts of water and 0.033 parts of EDTA (ethylenediaminetatraacetic acid), 0.067 parts of sodium formaldehydesulfoxylate and 0.018 parts of iron sulfate.

The polymerization reactor is repeatedly filled and purged with nitrogen gas so as to eliminate any trace of oxygen. The pre-heated emulsifying mixture is then fed into the reactor and this is followed by the addition of the activator batch. The reactor temperature is adjusted to 35°C. The reactor is fed with 0.06 parts of PMHP (paramenthane hydroperoxide) and the continuous and uniform feeding of the reaction mixture (monomers mixed with the chain transfer agent) beings, drop by drop, lasting a total of 5.3 hours.

The reaction is over when the mixture of monomers with the chain transfer agent, which had been previously prepared, is totally consumed. All along the course of the reaction, each droplet of the monomer is 100% converted into polymer. The rate of total solids in the resultant latex, after the addition of the mixture is over, is 23.11%.

After the end of the reaction, the rubber latex or the acrylic elastomer is coagulated by the addition of excessive magnesium chloride. The rubber is washed and dried at around 65°C.

The rubbers or acrylic elastomers prepared according to examples 1 and 2 were tested for Mooney viscosity so as to evaluate their processability. Elastomers' resistance to low temperatures is estimated by their glass transition temperature (Tg). Molecular weights were measured so as to show molecular weight distribution rates, polydispersity (Mw/Mn), found by size-exclusion chromatography (SEC). Table 1 shows the values of the properties borne by the rubbers prepared in examples 1 and 2 and the commercially available acrylic rubbers, Hytemp 4051® (sample 1) and Hytemp 4052 EP® (sample 2). For the purpose of comparison, the commercial rubbers here considered have the same resistance to low temperatures (same Tg) as the ones produced according to the present invention. That is to say, example 1 is compared with sample 1, and example 2 is compared with sample 2.

**Table 1**

| **Acrylic rubber Mooney Viscosity values and molecular weights** | | | | |
|---|---|---|---|---|
| **Property** | **Example 1** | **Sample 1** | **Example 2** | **Sample 2** |
| UML (1+4) at 100°C | 39.4 | 38.4 | 29.0 | 36.3 |
| Tg DSC, °C | -15 | -15 | -35 | -35 |
| Mₙ x 10⁻³ | 268 | 265 | 428 | 249 |
| M_{w} x 10⁻³ | 964 | 1219 | 1198 | 1245 |
| Polydispersity, M_{w}/Mₙ | 3.6 | 4.6 | 2.8 | 5.0 |

Comparing the obtained values of polydispersity, one can see that the rubbers prepared according to the process of the present invention bear narrower molecular weight distribution, confirming what is claimed in this patent application. Lower polydispersity promotes better mechanical properties in vulcanites, as can be seen in Table 3 which shows ultimate tensile strength values and modulus at 100%, without significantly changing, to better or worse, the compression set. Losses in elongation are due to the surprising improvement in modulus 100%. Reduction of swelling in oil, an important property for rubbers and acrylic elastomers, is another property enhanced by the invention.

In the preparation of curable compositions, according to the present invention, Haake® Internal Mixers and mill-mixers were used. The components of the compositions were blended at an initial temperature of around 60°C, being increased up to approximately 105°C, during 9 minutes. The quantities of components in the mixture are defined in parts per 100 parts of rubber (phr).

The curable acrylic rubber composition was prepared in quantities stated in Table 2 below in a Haake® mixer, but sodium stearate and quaternary ammonium salt were added later on into a mill-mixer.

**Table 2**

| **Curable acrylic rubber compositions (phr)** | | | | |
|---|---|---|---|---|
| **Ingredients** | **Rubber Example 1** | **Sample 1** | **Rubber Example 2** | **Sample 2** |
| Elastomer | 100 | 100 | 100 | 100 |
| Carbon black FEF N 550 | 60 | 60 | 60 | 60 |
| Stearic acid | 1.0 | 1.0 | 1.0 | 1.0 |
| Substituted diphenylamine (antioxidant) | 2.0 | 2.0 | 2.0 | 2.0 |
| Fatty acid ester processing aid (e.g.: Seriac WB 222) | 2.5 | 2.5 | 2.5 | 2.5 |
| Sodium stearate | 4.0 | 4.0 | 4.0 | 4.0 |
| Quaternary ammonium salt (e.g.: Cetyl Trimethyl Ammonium chloride) | 0.6 | 0.6 | 0.6 | 0.6 |

Rheometric tests were carried out so as to determine the optimum time of vulcanization of the specimens in order to proceed with physical tests. Rheometry was measured through test method ASTM D 2084.

The results of the physical tests are shown in Table 3 below.

**Table 3**

| **Physical tests** | | | | |
|---|---|---|---|---|
| **Property** | **Example 1 cured composition** | **Sample 2 cured composition** | **Example 2 cured composition** | **sample 2 cured composition** |
| Hardness (Shore A) | 66 | 64 | 64 | 61 |
| Ultimate tensile strength, Kgf/cm² (ASTM D 412) | 110 | 105 | 102 | 90 |
| Modulus @ 100%, Kgf/cm² (ASTM D 412) | 80 | 50 | 75 | 43 |
| Elongation at break, % (ASTM D 412) | 140 | 180 | 120 | 160 |
| Compression set, (150°C/70h deflection 25%) % (ASTM D 395, method B) | 14.2 | 15.5 | 22.9 | 18.0 |
| Swelling in oil ASTM #1 (150°C, 70h) %vol. | -2.2 | -3.5 | -2.5 | -3.8 |

## Claims

1. Polymerization process in aqueous emulsion for the preparation of rubber or acrylic elastomers bearing one or two active cure sites homogeneously distributed along the polymeric chain, with narrow molecular weight distribution and free of residual, unreacted monomers, **characterized in that** polymerization is carried out through a continuous, uniformly fed-batch process in which a pre-mixture of the monomers with the chain transfer agent is previously prepared in a separate vessel and then, later on, added drop by drop at a uniform rate into the reaction vessel, where 100% of the monomers added are immediately converted into polymer.

2. Polymerization process, according to claim 1, **characterized in that** the mixture of the monomers with the chain transfer agent may be optionally prepared in the presence of oxygen.

3. Polymerization process, according to claim 1 or 2, **characterized in that** the chain transfer agent is found in the proportion of 0.0013 to 0.13 phm.

4. Polymerization process according to claim 3, **characterized in that** the chain transfer agent is found preferably in the proportion of 0.002 to 0.02 phm.

5. Polymerization process according to claim 4, **characterized in that** the chain transfer agent is even more preferably found in the proportion of 0.0067 to 0.0125 phm.

6. Polymerization process according to claim 1, 2, 3, 4 or 5, **characterized in that** it is composed of the following stages:
a) Purging of the reactor with nitrogen gas so as to completely eliminate oxygen from the reaction system, since its presence would inhibit the initiation process and the propagation of the reaction;
b) Addition of the pre-heated emulsifier into the reaction vessel at around 65°C to 70°C;
c) Addition of a previously prepared solution of the free-radical initiator into the reaction vessel;
d) Feeding of a previously prepared mixture containing monomers and the chain transfer agent, drop by drop, at a continuous and uniform rate into the reaction vessel, until all of the mixture has reacted;
e) Transference of the reaction resultant latex to another vessel in which coagulation will be carried out;
f) Addition of a metal salt into the coagulation vessel, in sufficient quantities so as to trigger latex coagulation;
g) Washing and drying of the rubber or acrylic elastomer.

7. Rubber or acrylic elastomer bearing one or two active cure sites homogeneously distributed along the polymeric chain, with narrow molecular weight distribution and free of residual, unreacted monomers, **characterized in that** they are prepared according to the process defined in claims 1 to 6.

8. Rubber or acrylic elastomer, according to claim 7, **characterized by** consisting of:
a) 90 to 99% by weight, based on the total polymer weight, of an acrylate whose general formula is: 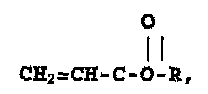 where R is a primary, secondary or tertiary alkyl radical containing from 1 or 8 carbon atoms, an alcoxyalkyl or alkylthioalkyl radical containing from 2 to around 12 carbon atoms;
b) 0 to 5% by weight of a monomer containing one or more carboxylic groupings of 3 to around 8 carbon atoms;
c) 0 to 5% by weight of a monomer containing an active halide grouping.

9. Rubber or acrylic elastomer, according to claim 8, **characterized by** the fact that the monomer (a) is ethyl acrylate, propyl acrylate, n-butyl acrylate, hexyl acrylate, 2-ethylhexyl acrylate, octyl acrylate, methoxyethyl acrylate, ethoxyethyl acrylate.

10. Rubber or acrylic elastomer, according to claim 8, **characterized by** the fact that the monomer (b) is preferably acrylic or methacrylic acid.

11. Rubber or acrylic elastomer, according to claim 8, **characterized by** the fact that the monomer (c) is vinyl chloroacetate, allyl chloroacetate, 2-chloroethyl acrylate, 2-chloroethyl vinyl ether, vinyl benzyl chloride.

12. Rubber or acrylic elastomer, according to claim 8, **characterized by** the fact that the monomer (a) is present in the proportion 94 to 98% by weight.

13. Rubber or acrylic elastomer, according to claim 8, **characterized by** the fact that the monomer (b) is present in the proportion 0.5 to 3.5% by weight.

14. Rubber or acrylic elastomer, according to claim 8, **characterized by** the fact that the monomer (c) is present in the proportion 0.5 to 3.5% by weight.

15. Rubber or acrylic elastomer based curable compositions **characterized by** being prepared according to the process described in claims 1 to 6.

16. Curable compositions, according to claim 15, **characterized by** bearing better ultimate tensile strength and Modulus @ 100% and lower swelling rates in oil.

17. Cured articles **characterized by** being produced from the curable compositions mentioned in claim 15 to 16.
